# EUROPEAN PATENT SPECIFICATION

(11) **EP 1 451 481 B1**
(45) Date of publication and mention of the grant of the patent: **14.06.2006**
(21) Application number: 02783378.9
(22) Date of filing: 14.11.2002
(51) Int. Cl.: F16D 25/08

(54) **ACTUATOR**
AKTUATOR
ACTIONNEUR

(30) Priority: 23.11.2001 GB 0128102
(43) Date of publication of application: 01.09.2004
(73) Proprietor: LuK Lamellen und Kupplungsbau Beteiligungs KG, 77815 Bühl (DE)
(72) Inventor: DESBOIS, Patrick, F-45160 Olivet (FR); CHRISTIAEN, Yannick, Frank, Theophile, Emile, F-45400 Chanteau (FR)
(74) Representative: Morrall, Roger
(86) International application number: PCT/IB2002/004768
(87) International publication number: WO 2003/044385

(56) References cited:
- WO-A-00/77415
- GB-A- 2 168 119
- US-A- 4 945 728

## Description

In European Patent Application No EP 0894687 there is disclosed and claimed an actuator (hereinafter referred to as of the kind specified) in the form of an actuating cylinder comprising a piston which is axially displaceable in sealed sliding contact with an associated bore to define a working chamber on one side of the piston, said cylinder being characterised in that the piston has a seal made from plastics material which is radially outwardly biased against the associated bore by a resilient insert which is forced fit in a recess in the seal.

Such an activating cylinder is also known from WO-A-0 077 415.

Such actuators whilst generally efficient can suffer from reduced seal efficiency due to the plastics seal losing some of its resilience (and hence contact pressure) if the seal is continually pressed against the mating cylinder bore.

It is an object of the present invention to provide an actuating cylinder which at least partially mitigates the above seal problem.

Thus according to the present invention there is provided an actuating cylinder of the kind specified in which when the piston is in a retracted position (i.e. when the working chamber is connected with an associated reservoir for recouperation) the piston makes sealing contact with a part of the bore which has a larger diameter than that part of the bore contacted by the seal when the piston is displaced along the bore to pressurise the working chamber.

By arranging for the retracted position of the piston to be in a larger diameter portion of the bore the plastic seal of the piston is able to rest at a diameter larger than the diameter of the seal when the piston is working to pressurise the working chamber thus ensuring that the seal is radially inwardly compressed from its retracted state on each working stroke of the piston so that seal contact pressure is maintained when the seal is actively working.

Also, since the piston occupies its retracted position for most of the time when the actuator is used, for example, to operate a vehicle clutch, the seal remains in the relatively lowly loaded condition in the larger diameter portion of the bore for most of its life. This further helps to maintain the seal contact pressure.

The larger diameter portion of the bore occupied by the seal when the piston s in its retracted position can be achieved by providing a step in the bore or be using a bore whose diameter tapers along the length of the bore.

The present invention can be combined with the recouperation sleeve arrangement disclosed and claimed in published PCT patent application WO00/77415A by arranging the internal diameter of the sleeve contacted by the piston seal when in its fully retracted position to have a diameter greater than the diameter of the remainder of the bore in which the piston seal operates when pressurising the working chamber.

One embodiment of the present invention will now be described, by way of example only, with reference to the accompanying drawings in which:-
Figure 1 shows, partially diagramatically, in section a master cylinder embodying the present invention;
Figure 2 shows part of the cylinder of figure 1 on a larger scale, and
Figure 3 shows a perspective view of a recouperation sleeve used in the cylinder of Figures 1 and 2.

Referring to the drawings a hydraulic master cylinder 10 for use in the operation of a vehicle clutch comprises a body 11 having a bore 12 in which a piston 13 is in sealed sliding contact. Piston 13 is connected with an associated clutch pedal 14 as shown diagramatically by the connection 15 and ahead of the piston 15 a working chamber 16 is provided with an outlet 17 connected via conduit (not shown) with a clutch operating slave cylinder.

The master cylinder also has an inlet 18 which is connected with a fluid reservoir (not shown) and also a larger diameter portion 19 of bore 12 via a passage 20. Piston 13 carries a main seal 21 which is of plastics material being an integral part of component 22. The plastics main seal 21 is energised by a rubber annulus 23 which ensures that the plastic seal remains in contact with the associated bore etc. This sealing arrangement is the subject of the Applicant's previously referred to co-pending European Patent Application No. EP 0894687 A1.

The component 22 and rubber annulus 23 are held in place on the remainder of the piston by a central member 24 which is pressed into, welded or otherwise secured to the main body 25 of the piston 13. In the construction shown the central member 24 has an axial bore 26 which is provided for manufacturing reasons (to reduce shrinkage) since the central member 24 is produced by an injection moulding technique from plastics material. The central member may alternatively, for example, be of a shorter construction which may not necessarily include the shrinkage bore 26.

In a preferred arrangement both the body 11 and piston 13 etc. are all formed from plastics material by injection moulding techniques.

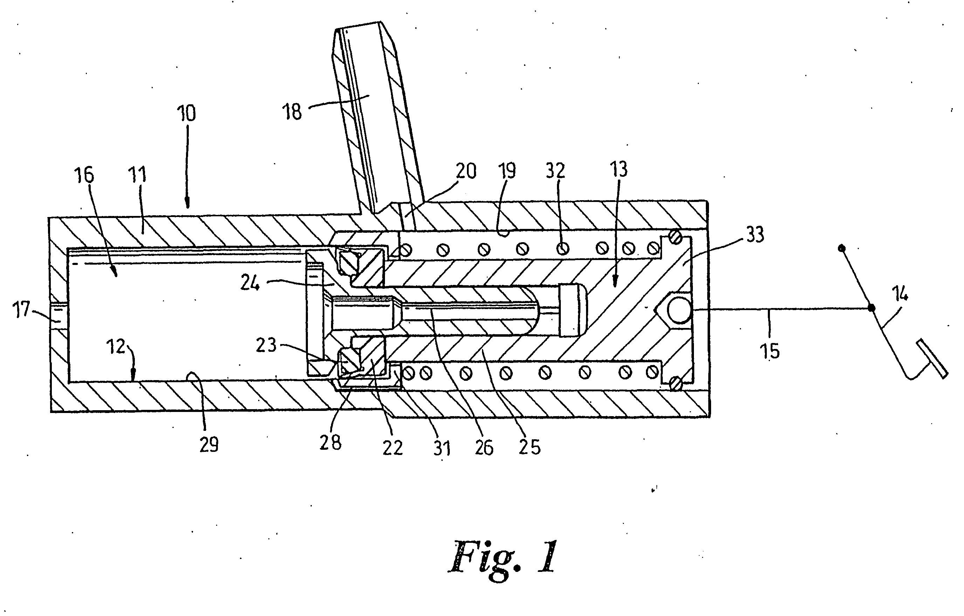

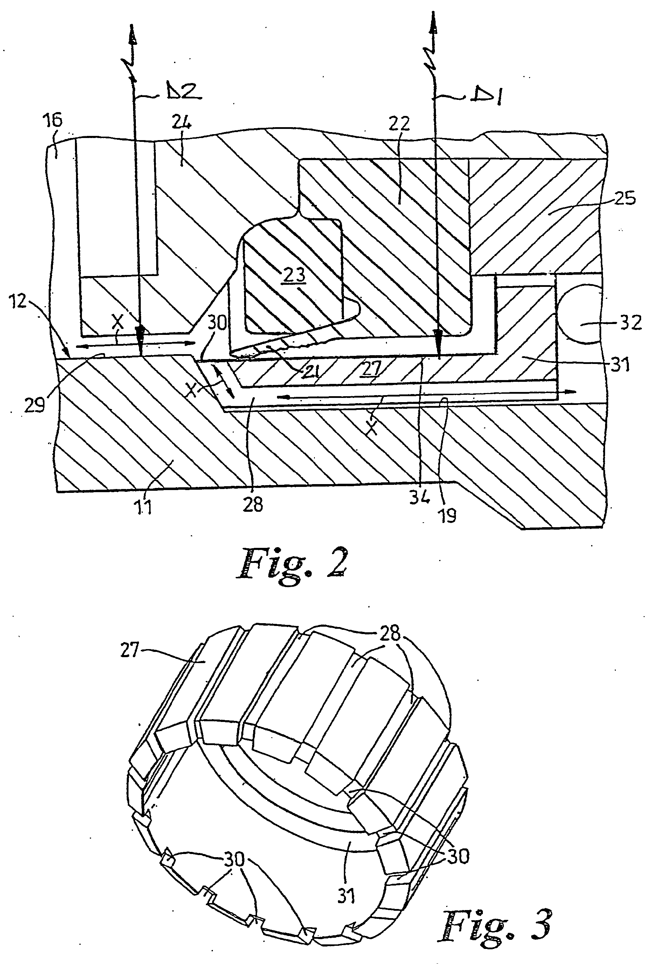

An annular sleeve 27 is provided in the larger diameter portion 19 of bore 12. Sleeve 27 includes axially extending grooves 28 which in combination with bore portion 19 define passages which emerge into the smaller diameter portion 29 via openings 30. Sleeve 27 also includes an annular shoulder 31 against which a return spring 32 reacts. The other end of spring 32 reacts against a shoulder 33 provided on piston 13 to ensure that the piston always returns to the fully retracted recouperation position shown in figures 1 and 2 in the associated pedal for its release.

As can be seen from figures 1 and 2 when the piston is in the fully retracted position the main seal is in contact with the internal surface 34 of sleeve 27 and the openings 30 in the sleeve are no longer sealed allowing communication between the inlet 18 and the working chamber 16 via passages 20 and grooves 28 (see arrows X). Thus in the fully retracted position of the piston the reservoir connected with inlet 18 is in communication with working chamber 16 allowing recouperation of fluid into the working chamber 16 to take account any increase in working stroke of the piston necessary due to the wear of the associated clutch or any leakage of fluid from the working chamber.

When pedal 14 is pushed piston 13 is moved to the left from its fully retracted position shown in figures 1 and 2 so that main piston seal 21 moves to the left of openings 30 to cut-off flow through grooves 28 and allow pressurisation of working chamber 16 in the normal manner.

The use of a relatively large number of grooves 28 provides a quick recouperation function achieved each time the piston goes to the fully retracted position thus reducing any dead travel in the operating stroke of the piston.

In accordance with the present invention the internal diameter D1 of the sleeve 27 on which the piston seal 21 slides when the piston is in its fully retracted recouperation position is slightly larger than the diameter D2 of the remainder of the bore 29 in which the piston slides when pressurising the working fluid in chamber 16. Typical D1 is say 16.3 mm whereas D2 is say 16.1 mm.

This use of the larger diameter D1 for the recouperation position, a position occupied by the piston for most of its operating life, allows the seal to rest at a diameter greater than that of bore 29 so that seal 21 retains sufficient resilience to maintain good seal contact pressure during pressurisation of chamber 16 and avoid the previously mentioned sealing problems.

The larger diameter portion of the bore to be contacted by the seal when in its fully retracted position can be provided by any suitable means such as direct moulding of the larger diameter portion, by use of a sleeve to provide the larger diameter portion or by machining the bore to produce the larger diameter portion.

Also whilst the invention has been described above in relation to a step change between the recouperation and working diameters D1 and D2 it will be appreciated that the bore which is contacted by the piston may have a diameter which tapers along its length from a larger diameter at the recouperation position to a smaller diameter(s) at those locations where the working chamber fluid is pressurised.

## Claims

1. An actuating cylinder (10) comprising a piston (13) which is axially displaceable in sealed sliding contact with an associated bore (12) to define a working chamber (16) on one side of the piston, the piston having a seal (21) made from plastics material (22) which is radially outwardly biased against the associated bore by a resilient insert (23) which is a forced fit in a recess in the seal, the cylinder being **characterised in that** when the piston (13) is in a retracted position and the working chamber is connected with an associated reservoir for recouperation, the piston seal (22) makes sealing contact with a part (34) of the bore which has a larger diameter than that part (29) of the bore contacted by the seal when the piston is displaced along the bore to pressurise the working chamber (16).

2. A cylinder according to claim 1 in which the larger diameter portion (34) of the bore is provided by a step in the bore.

3. A cylinder according to claim 1 in which the large diameter portion of the bore is provided by tapering the bore.

4. A cylinder according to claim 1 or 2 in which the larger diameter portion of the bore is provided by a sleeve (27) whose internal diameter (34) which is contacted by the piston seal (22) when in its fully retracted position has a diameter greater than the diameter (29) of the remainder of the bore in which the piston seal operates when pressurising the working chamber (16).

5. A cylinder according to claim 4 in which the sleeve (27) includes axially extending recouperation grooves (28) which are open to an associated fluid reservoir when the piston seal (22) is retracted within the sleeve and are closed when the piston seal (22) is contacting the remainder (29) of the bore.

## Patentansprüche

1. Stellzylinder (10) mit einem Kolben (13), der in dichtem Gleitkontakt mit einer zugehörigen Bohrung (12) axial verschiebbar ist, um eine Arbeitskammer (16) auf einer Seite des Kolbens zu begrenzen, wobei der Kolben eine aus Kunststoff (22) hergestellte Dichtung (21) hat, die gegen die zugehörige Bohrung durch ein federnd nachgiebiges Einsatzstück (23), das einen Festsitz in einer Aussparung in der Dichtung hat, radial nach außen vorgespannt ist, wobei der Zylinder **dadurch gekennzeichnet ist, dass** wenn der Kolben (13) in einer zurückgezogenen Stellung ist und die Arbeitskammer mit einem zugehörigen Vorratsbehälter für deren Wiederbefüllung verbunden ist, die Kolbendichtung (22) in Dichtungskontakt mit einem Teil (34) der Bohrung ist, der einen größeren Durchmesser als derjenige Teil (29) der Bohrung hat, der von der Dichtung berührt wird, wenn der Kolben entlang der Bohrung verschoben wird, um die Arbeitskammer (16) unter Druck zu setzen.

2. Zylinder nach Anspruch 1, bei dem der den größeren Durchmesser aufweisende Teil (34) der Bohrung durch eine Stufe in der Bohrung gebildet wird.

3. Zylinder nach Anspruch 1, bei dem der den größeren Durchmesser aufweisende Teil der Bohrung durch Verjüngen der Bohrung gebildet wird.

4. Zylinder nach Anspruch 1 oder 2, bei dem der den größeren Durchmesser aufweisende Teil der Bohrung von einer Hülse (27) gebildet wird, deren Innendurchmesser (34), der von der Kolbendichtung (22) berührt wird, wenn sie in der vollständig zurückgezogenen Stellung ist, einen Durchmesser hat, der größer als der Durchmesser (29) des Restes der Bohrung ist, in dem die Kolbendichtung arbeitet, wenn die Arbeitskammer (16) unter Druck gesetzt wird.

5. Zylinder nach Anspruch 4, bei dem die Hülse (27) axial verlaufende Wiederbefüllungsrillen (28) enthält, die zu einem zugehörigen Flüssigkeitsvorratsbehälter hin offen sind, wenn die Kolbendichtung (22) innerhalb der Hülse zurückgezogen ist, und geschlossen sind, wenn die Kolbendichtung (22) den Rest (29) der Bohrung berührt.

## Revendications

1. Cylindre d'actionnement (10) comprenant un piston (13) pouvant se déplacer axialement en contact coulissant hermétique avec un alésage associé (12) pour définir une chambre de travail (16) d'un côté du piston, le piston comportant un joint (21) à base de matériau plastique (22) qui est incliné vers l'extérieur dans l'axe radial, contre l'alésage associé, par un insert élastique (23) qui est ajusté à force dans un évidement du joint, le cylindre **se caractérisant en ce que** lorsque le piston (13) est en position de retrait et que la chambre de travail est reliée à un réservoir de récupération associé, le joint de piston (22) assure un contact hermétique avec une partie (34) de l'alésage dont le diamètre est plus grand que la partie (29) de l'alésage en contact avec joint lorsque le piston se déplace le long de l'alésage pour pressuriser la chambre de travail (16).

2. Cylindre selon la revendication 1, dans lequel la portion d'alésage de plus grand diamètre (34) comporte un épaulement.

3. Cylindre selon la revendication 1, dans lequel la portion d'alésage de grand diamètre est obtenue en rendant l'alésage conique.

4. Cylindre selon la revendication 1 ou 2, dans lequel la portion d'alésage de plus grand diamètre est munie d'un manchon (27) dont le diamètre interne (34), qui est en contact avec le joint du piston (22) lorsque celui-ci se trouve en position de retrait complet, présente un diamètre supérieur au diamètre (29) du reste de l'alésage dans lequel opère le joint de piston lorsqu'il pressurise la chambre de travail (16).

5. Cylindre selon la revendication 4, dans lequel le manchon (27) comprend des gorges de récupération (28) s'étirant axialement, qui sont ouvertes vers un réservoir de fluide associé lorsque le joint de piston (22) est rétracté à l'intérieur du manchon et sont fermées lorsque le joint de piston (22) est en contact avec le reste (29) de l'alésage.
